# EUROPÄISCHE PATENTSCHRIFT

(11) **EP 1 663 590 B1**
(45) Veröffentlichungstag und Bekanntmachung des Hinweises auf die Patenterteilung: **10.09.2008**
(21) Anmeldenummer: 04738796.4
(22) Anmeldetag: 25.06.2004
(51) Int. Cl.: B27G 19/02, B23D 45/06

(54) **TISCHKREISSÄGEMASCHINE**
CIRCULAR SAW BENCH
MACHINE A SCIE CIRCULAIRE A TABLE

(30) Priorität: 22.08.2003 DE 10338651
(43) Veröffentlichungstag der Anmeldung: 07.06.2006
(73) Patentinhaber: ROBERT BOSCH GMBH, 70442 Stuttgart (DE)
(72) Erfinder: Wong, Kelvin, JP-N.T. Hong-Kong (HK)
(86) Internationale Anmeldenummer: PCT/DE2004/001349
(87) Internationale Veröffentlichungsnummer: WO 2005/025823

(56) Entgegenhaltungen:
- FR-A- 2 544 246
- US-A- 1 255 886
- US-A- 1 879 280
- US-A- 4 721 023
- US-A- 4 962 685

## Beschreibung

### Stand der Technik

Die vorliegende Erfindung geht aus von einer Tischkreissägemaschine nach dem Oberbegriff des Anspruchs 1.

Aus FR 2 544 246 A ist eine gattungsgemäße Tischkreissäge mit einem seitlichen Schutzblech bekannt. Diese hat allerdings kein mit dem Schutzblech gekoppeltes Mittel, das die Frontöffnung zur Schutzhaube gegen ungewolltes Berühren mit der Hand verschließt.

Es sind Tischkreissägemaschinen mit einer Tischplatte bekannt, über die ein Sägeblatt hervorsteht, wobei der überstehende Bereich des Sägeblatts von einer gegenüber dem Sägeblatt bzw. gegenüber der Tischplatte höhenverstellbaren Schutzhaube überdeckt ist und wobei das Sägeblatt gegenüber der Tischplatte zum Zweck von Schrägschnitten winkelverstellbar ist. Ist das Sägeblatt gemeinsam mit der Schutzhaube zum Ausführen von Schrägschnitten um eine im wesentlichen parallel zum Sägeblatt und in der Ebene der Tischplatte liegende Schwenkachse winkelverstellt, bildet sich zwischen der Schutzhaube und dem Werkstück ein Spalt auf der Seite der Schutzhaube, die einen stumpfen Winkel gegenüber der Tischplatte einnimmt. Je stumpfer dieser Winkel ist, umso größer ist der Spalt und damit die Gefahr, dass der Bedienende sich beim Sägen verletzt, weil er durch den Spalt hindurch mit den Fingern ungewollt an das Sägeblatt geraten kann.

### Vorteil der Erfindung

Die Erfindung mit den Merkmalen des Anspruchs 1 hat den Vorteil, dass

im Frontbereich der Schutzhaube ein abgewinkelter Lappen des Schutzblechs quer zum Schutzblech - und damit quer zum Sägeblatt - parallel zu den Langlöchern durch eine Seitenwand der Schutzhaube bis kurz vor die gegenüberliegende Seitenwand reichend greift, ist nicht außer dem seitlichenSpalt zwischen der Seitenwand und dem Werkstück auch der frontale Bereich der Schutzhaube vor dem Sägeblatt gegen den Durchgriff der Hand geschlossen.

### Zeichnung

Nachstehend ist die Erfindung anhand eines Ausführungsbeispiels mit zugehöriger Zeichnung näher erläutert.

### Es zeigen

Figur 1 eine räumliche Ansicht einer Tischkreissäge mit Schutzhaube und Schutzblech,
Figur 2 einen Ausschnitt der Tischkreissäge gemäß Figur 1 im Bereich der Schutzhaube und
Figur 3 ein vergrößerter Ausschnitt gemäß Figur 2.

### Beschreibung des Ausführungsbeispiels

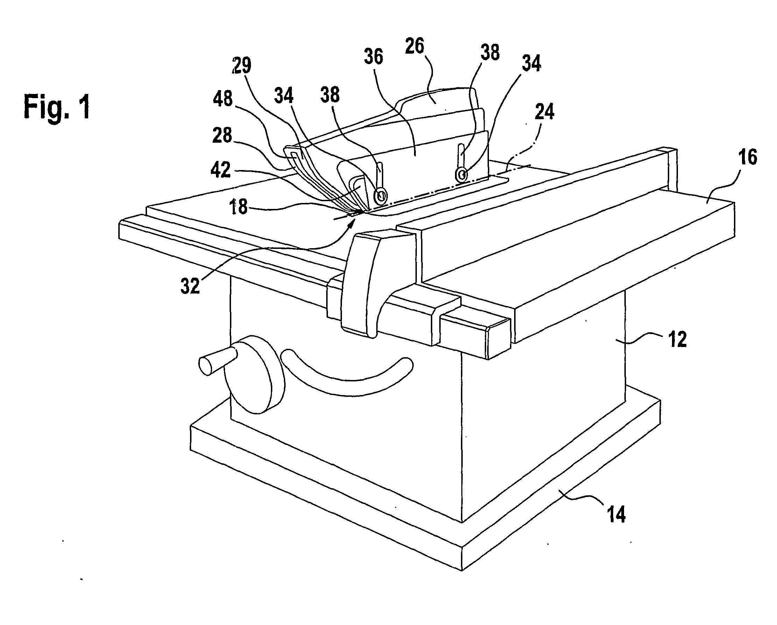

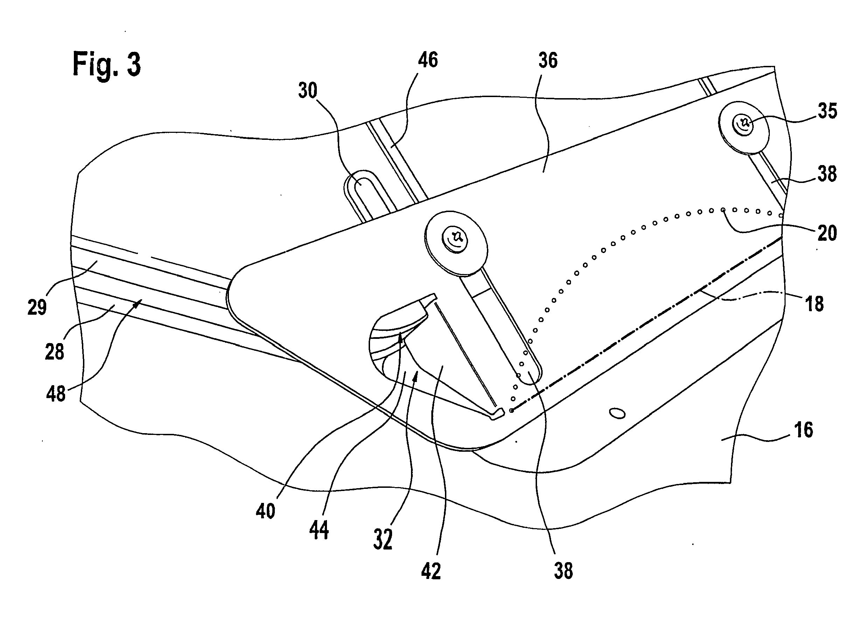

Eine in Figur 1 gezeigte Tischkreissäge 10 bildet mit ihrem Untergestell 12 einen Fußbereich 14 und steht mit diesem auf einer nicht bezeichneten Werkbank. Oben auf dem Untergestell 12 sitzt eine Tischplatte 16, die von einem zu mindestens einer der Tischkanten rechtwinklig verlaufenden Schlitz 18 durchtreten wird, durch den ein Sägeblatt 20 (Figur 3) nach oben hindurchragt, das von einer Schutzhaube 26 übergriffen wird.

Das Sägeblatt 20 sitzt an einem nicht näher beschriebenen Sägeaggregat unterhalb der Tischplatte 16 schwenkverstellbar gelagert, wobei das Sägeblatt 20 mit der Schutzhaube 26 in Betrachtungsrichtung nach links schwenkbar ist - um eine strichpunktiert dargestellte, etwa in der Ebene der Tischplatte 16 liegende Schwenkachse 24. Die Schwenkachse kann - je nach Konstruktion der Tischkreissäge - auch deutlich unterhalb der Tischplatte liegen.

Beim Schwenken nach links bildet sich zwischen der Unterkante 40 der rechten Seitenwand 29 der Schutzhaube 26 und der Tischplatte 16 bzw. einem zwischen Schutzhaube 26 und Tischplatte 16 positionierbaren, nicht dargestellten Werkstück ein Spalt 32. Dieser wird umso größer, je weiter die Schutzhaube 26 nach links geschwenkt wird, wobei sich zwischen der rechten Seitenwand 29 der Schutzhaube 26 und der Werkstückoberfläche bzw. der Tischplatte 16 ein zunehmend stumpfer Winkel bildet. Der Spalt 32 wird gebildet, weil die Schutzhaube 36 sich auf der Unterkante 27 der in Betrachtungsrichtung linken Seitenwand 28 abstützt und quasi um diese geschenkt wird, so dass sich die Unterkante 27 der rechten Seitenwand 29 vom Werkstück bzw. von der Tischplatte 16 abhebt.

Um diesen Spalt 32 sicher zu verschließen, sind in der rechten Seitenwand 29 der Schutzhaube 26 zwei Führungsbolzen 34 befestigt, die ein Schutzblech 36 flächenparallel verschiebbar festhalten. Dabei ist der Abstand der Bolzenköpfe 35 zur Seitenwand 28 so bemessen, dass das Schutzblech 36 mit einem gewissen Spiel gehaltert ist. Die Führungsbolzen 34 durchtreten zwei parallele, senkrecht zur Tischplatte 16 verlaufende Langlöcher 30 des Schutzblechs 36, die so lang sind und damit einen so reichlichen Verschiebeweg zwischen Schutzblech 36 und Seitenwand 29 erlauben, dass das Schutzblech 36 auch in extremer Winkellage einen maximalen Spalt 32 noch sicher verschließt. Dadurch, dass sich das Schutzblech 36 mit seiner Unterkante aufgrund des Eigengewichts abstützend auf der Tischplatte 16 zu halten sucht, wird bei einer Schwenkbewegung der Schutzhaube 26 sich diese immer entgegen dem Schutzblech 36 mit zunehmendem Winkel nach oben bzw. mit kleiner werdendem Winkel nach unten relativ bewegen.

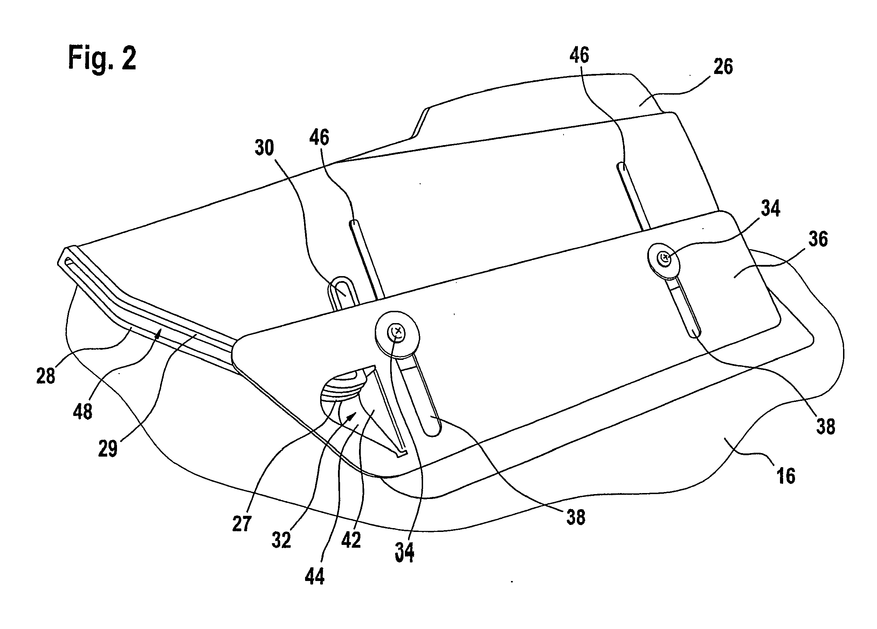

Das Schutzblech 36 weist in seinem vorderen, in Betrachtungsrichtung linken Bereich eine fensterartige Öffnung 44 auf, die durch eine im wesentlichen C-förmige Stanzkontur gebildet wird, deren Fläche um eine Verbindungsgrade zwischen den Endpunkten des C-förmigen Kontur rechtwinklig umgebogen ist, einen Schlitz 30 der rechten Seitenwand 29 der Schutzhaube 26 durchtritt (Figur 2, 3) und einen sich bis zur gegenüberliegenden Seitenwand 28 erstreckenden Lappen 42 bildet. Dieser Lappen 42 verhindert ein frontales Durchgreifen der Bedienhand durch die Frontöffnung 48 der Schutzhaube 26 und senkt damit das Risiko, dass das Sägeblatt mit den Fingern berührt wird.

Das Sägeblatt 20 und die Schutzhaube 26 befinden sich in rechtwinkliger Position gegenüber der Tischplatte 16, so dass hier zwischen der Unterkante 40 der Schutzhaube 36 und der Tischplatte 16 ein Null-Spalt 32 besteht und das Schutzblech 36 mit seinem rechtwinklig umgebogenen frontalen Lappen 42 zwar keinen seitlichen Spalt 32 zu schließen hat, aber mit seinem Lappen 42 die Frontöffnung 48 zur Schutzhaube 26 gegen ungewolltes Berühren des Sägeblatts mit der Hand verschließt und somit auch in dieser Position der Schutzhaube 26 eine Sicherheitsfunktion wahrnimmt.

Figur 2 zeigt einen Ausschnitt der Tischplatte 16 mit der Schutzhaube 26, dessen Sägeblatt 20 (Fig. 3) etwa um 45° nach links geschwenkt ist, dessen Bewegung die Schutzhaube 26 synchron folgt. Dabei hat sich ein deutlicher Spalt 32 von mindestens 1 cm Breite zwischen der Unterkante 40 der Seitenwand 29 und der Oberseite der Tischplatte 16 gebildet, der wiederum vom Schutzblech 36 sicher verschlossen ist. Dieses ist innerhalb seiner Langlöcher 38 gegenüber der rechten Seitenwand 29 der Schutzhaube 26 vollständig nach unten gerutscht. Dabei ist zugleich die Frontöffnung 48 der Schutzhaube 26 durch den Lappen 42 des Schutzblechs 36 geschlossen.

Figur 3 zeigt einen Ausschnitt aus Figur 2 als Vergrößerung eine Teilansicht der Schutzhaube 26. Dabei wird besonders deutlich die Position der Unterkante 27 der Seitenwand 29 und eine Ansicht des umgebogenen Lappens 42 in seiner Schließfunktion. Der längs verlaufende Spalt 32 als Abstand zwischen der Unterkante 27 der Seitenwand 29 bezüglich der Tischplatte 16 ist deutlich erkennbar und auch, dass das parallel zur Seitenwand 28 verschobene Schutzblech 36 diesen Spalt 32 verschließt. Durch gepunktet weiße Linien dargestellt ist die Kontur des Sägeblatts 20 innerhalb der Schutzhaube 36 sowie der Schlitz 18 zum Durchtritt des Sägeblatts 20 in der Tischplatte 16 schematisch als strichpunktierte Linie gezeigt. Gut erkennbar sind auch die Gleitrippen 46 und der Schlitz 30 der rechten Seitenwand 29.

Bei nach beiden Seiten schwenkbarem Sägeaggregat sind selbstverständlich an beiden Seitenwänden der Schutzhaube Schutzbleche anzuordnen.

## Patentansprüche

1. Tischkreissäge (10) mit einer Tischplatte (16), über die ein Sägeblatt (20) übersteht, wobei der überstehende Bereich durch eine, insbesondere gegenüber dem Sägeblatt (20) höhenverstellbare, Schutzhaube (26) überdeckt ist und wobei das Sägeblatt (20) gegenüber der Tischplatte (16) winkelverstellbar ist, wobei sich zwischen der Schutzhaube (26) und der Tischplatte (16) ein Spalt (32) bildet und wobei die Schutzhaube (26) ein Schutzblech (36) trägt, das gegenüber der Schutzhaube (26) bewegbar gelagert ist und das den Spalt (32) schließt, insbesondere derart, dass er für Finger des Bedienenden unpassierbar ist, **dadurch gekennzeichnet, dass** ein abgewinkelter Lappen (42) des Schutzblechs (36) quer zu diesem, parallel zu Langlöchern (38), durch eine Seitenwand (29) der Schutzhaube (26) greift und bis zur gegenüberliegenden Seitenwand (28) reicht.

2. Tischkreissäge nach Anspruch 1, **dadurch gekennzeichnet, dass** ein, insbesondere nach unten offener Schlitz (30) in der Seitenwand (29) zum Durchtritt des abgewinkelten Lappens (42) des Schutzblechs (36) angeordnet ist.

3. Tischkreissäge nach Anspruch 1 oder 2, **dadurch gekennzeichnet, dass** der Spalt (32) unabhängig von seiner Größe beim Entstehen selbsttätig geschlossen wird.

4. Tischkreissäge nach Anspruch 1, 2 oder 3, **dadurch gekennzeichnet, dass** sich das Schutzblech (36) mit seiner Schmalseite auf der Tischplatte (16) abstützt, wo es aufgrund seines Eigengewichts zu bleiben sucht und zugleich mit seiner Flachseite eng an einer Seitenwand (28, 29) der Schutzhaube (26) parallel relativbewegbar befestigt ist und dabei Schwenkbewegungen der Schutzhaube (26) folgt.

5. Tischkreissäge nach einem der Ansprüche 1 bis 4, **dadurch gekennzeichnet, dass** das Schutzblech (36) an derjenigen Seitenwand (29) gelagert ist, die bei Schwenkpositionierung des Sägeblatts (20) einen stumpfen Winkel mit der Tischplatte (16) bilden kann.

6. Tischkreissäge nach Anspruch 1 bis 5, **dadurch gekennzeichnet, dass** das Schutzblech (36) zwei im wesentlichen senkrecht zur Tischplatte (16) verlaufende, als Führungskanäle für eine geführte Parallelverschiebung des Schutzblechs (36) gegenüber der Seitenwand (29) dienende Langlöcher (38) trägt, die von je einem in der Seitenwand (29) befestigten Führungsbolzen (34) durchgriffen werden, deren Bolzenköpfe (35) das Schutzblech (36) übergreifen und es damit mit geringem Spiel an der Seitenwand (28) gegen Lösen gesichert halten.

7. Tischkreissäge nach einem der Ansprüche 1 bis 6, **dadurch gekennzeichnet, dass** eine Seitenwand (29) parallel zu den Langlöchern (38) des Schutzblechs (36) verlaufende Gleitrippen (46) trägt, auf denen das Schutzblech (36) reibungsarm abstützbar ist.

8. Tischkreissäge nach einem der Ansprüche 1 bis 7, **dadurch gekennzeichnet, dass** die Schutzhaube (26), insbesondere aus Kunststoff bestehend, durchsichtig ist.

9. Tischkreissäge nach einem der Ansprüche 1 bis 8, **dadurch gekennzeichnet, dass** die Schutzhaube (26) gegenüber der Tischplatte (16) höheneinstellbar, insbesondere an die Abmessungen zwischen Schutzhaube (26) und Tischplatte (16) zu führende und zu sägende Werkstücke unterschiedlicher Abmessungen anpassbar ist.

## Claims

1. Circular saw bench (10) with a bench top (16) over which a saw blade (20) protrudes, wherein the protruding region is covered by a protective hood (26) which is height-adjustable in particular in relation to the saw blade (20), and wherein the saw blade (20) can be adjusted in angle in relation to the bench top (16), wherein a gap (32) is formed between the protective hood (26) and the bench top (16) and wherein the protective hood (26) bears a protective plate (36) which is mounted movably in relation to the protective hood (26) and which closes the gap (32), in particular in such a manner that the operator's fingers cannot pass therethrough, **characterized in that** an angled tab (42) of the protective plate (36) reaches transversely with respect thereto and parallel to the elongated holes (38) through a side wall (29) of the protective hood (26) and extends as far as the opposite side wall (28).

2. Circular saw bench according to Claim 1, **characterized in that** an in particular downwardly open slot (30) is arranged in the side wall (29) for the passage of the angled tab (42) of the protective plate (36).

3. Circular saw bench according to Claim 1 or 2, **characterized in that** the gap (32) is automatically closed as it arises irrespective of its size.

4. Circular saw bench according to Claim 1, 2 or 3, **characterized in that** the protective plate (36) is supported with its narrow side on the bench top (16) where it attempts to remain on account of its dead weight and at the same time is fastened with its flat side snugly against a side wall (28, 29) of the protective hood (26) in a manner such that it is movable parallel relative thereto and follows pivoting movements of the protective hood (26).

5. Circular saw bench according to one of Claims 1 to 4, **characterized in that** the protective plate (36) is mounted on that side wall (29) which can form an obtuse angle with the bench top (16) upon positioning of the saw blade (20) by pivoting.

6. Circular saw bench according to Claims 1 to 5, **characterized in that** the protective plate (36) bears two elongated holes (38) which run substantially perpendicularly to the bench top (16), serve as guide channels for a guided parallel displacement of the protective plate (36) in relation to the side wall (29) and through which a respective guide bolt (34) fastened in the side wall (29) reaches, the bolt heads (35) of which guide bolts engage over the protective plate (36) and therefore hold it with little play on the side wall (28) in a manner secured against release.

7. Circular saw bench according to one of Claims 1 to 6, **characterized in that** one side wall (29) bears sliding ribs (46) which run parallel to the elongated holes (38) of the protective plate (36) and on which the protective plate (36) can be supported with little friction.

8. Circular saw bench according to one of Claims 1 to 7, **characterized in that** the protective hood (26) is transparent, in particular consisting of plastic.

9. Circular saw bench according to one of Claims 1 to 8, **characterized in that** the protective hood (26) can be adjusted in height in relation to the bench top (16), and in particular can be matched to the dimensions of workpieces of different dimensions which are to be guided and sawn between protective hood (26) and bench top (16).

## Revendications

1. Scie circulaire de table (10) comportant un plateau (16) d'où dépasse un disque de scie (20),
la partie qui dépasse étant couverte par un capot protecteur (26) notamment réglable en hauteur par rapport au disque de scie (20), qui est inclinable par rapport au plateau (16),
un intervalle (32) étant formé entre le capot (26) et le plateau (16), et
le capot (26) porte une tôle de protection (36) mobile par rapport au capot (26) et fermant l'intervalle (32) notamment pour que les doigts de l'utilisateur ne puissent passer dans cet intervalle,
**caractérisée par**
une patte (42) de la tôle de protection (36) repliée transversalement à la tôle, parallèlement aux trous oblongs (38) et traversant la paroi latérale (29) du capot (26) pour arriver jusque contre la paroi latérale (28), opposée.

2. Scie circulaire de table selon la revendication 1,
**caractérisée en ce que**
la paroi latérale (29) comporte une fente (30) notamment ouverte vers le bas pour le passage de la patte repliée (42) de la tôle de protection (36).

3. Scie circulaire de table selon la revendication 1 ou 2,
**caractérisée en ce que**
l'intervalle (32) est automatiquement fermé lorsqu'il se forme, indépendamment de sa dimension.

4. Scie circulaire de table selon les revendications 1 2, 3,
**caractérisée en ce que**
la tôle de protection (36) s'appuie contre le plateau (16) par son petit côté et sous l'effet de son poids, la tôle tend à rester dans cette position en étant en même temps fixée par son côté plat, étroitement contre une paroi latérale (28, 29) du capot protecteur (26), en restant mobile parallèlement à celui-ci et suivant ainsi les mouvements de pivotement du capot de protection (26).

5. Scie circulaire de table selon les revendications 1 à 4,
**caractérisée en ce que**
la tôle de protection (36) est montée sur la paroi latérale (29) qui peut former un angle obtus avec le plateau (16)lors du positionnement en pivotement de la lame de scie (20).

6. Scie circulaire de table selon les revendications 1 à 5,
**caractérisée en ce que**
la tôle de protection (36) est munie de deux trous oblongs (38) pratiquement perpendiculaires au plateau de table (16) et servant de glissière de guidage pour un coulissement parallèle guidé de la tôle de protection (36) par rapport à la paroi latérale (29), ces trous oblongs étant traversés chacun par une vis de guidage (34) fixée à la paroi latérale (29), les têtes (35) des vis chevauchant la tôle de protection (36) et maintenant celle-ci avec un faible jeu contre la paroi latérale (28) pour éviter qu'elle ne se détache.

7. Scie circulaire de table selon les revendications 1 à 6,
**caractérisée en ce qu'**
une paroi latérale (29) comporte des nervures de guidage (46) parallèles aux trous oblongs (38) de la tôle de protection (36), nervures sur lesquelles la tôle de protection (36) s'appuie avec un frottement réduit.

8. Scie circulaire de table selon les revendications 1 à 7,
**caractérisée en ce que**
le capot de protection (26), réalisé notamment en matière plastique est transparent.

9. Scie circulaire de table selon les revendications 1 à 8,
**caractérisée en ce que**
le capot de protection (26) est réglable en hauteur par rapport au plateau (16), notamment adaptable aux dimensions différentes des pièces à guider et à scier entre le capot de protection (26) et le plateau (16).
